# EUROPEAN PATENT APPLICATION

(11) **EP 4 566 989 A1**
(43) Date of publication of application: **11.06.2025**
(21) Application number: 23852582.8
(22) Date of filing: 08.08.2023
(51) Int. Cl.: C01B 32/05

(54) **METHOD FOR PRODUCING CARBONACEOUS LUMP**

(30) Priority: 08.08.2022 JP 2022126673
(71) Applicant: JFE Steel Corporation, Tokyo 100-0011 (JP)
(72) Inventor: TAKEHARA Kenta, Tokyo 100-0011 (JP); DOHI Yusuke, Tokyo 100-0011 (JP); IGAWA Daisuke, Tokyo 100-0011 (JP); YAMAMOTO Tetsuya, Tokyo 100-0011 (JP); MORIYA Kota, Tokyo 100-0011 (JP); MORITA Yuya, Tokyo 100-0011 (JP); KAWAI Yuya, Tokyo 100-0011 (JP); TAKASHIMA Takanori, Tokyo 100-0011 (JP)
(74) Representative: Haseltine Lake Kempner LLP
(86) International application number: PCT/JP2023/028999
(87) International publication number: WO 2024/034620

(57) **Abstract**

Provided is a method of producing a high-strength carbon agglomerate from a gas containing C as a constituent element. The method of producing a carbon agglomerate includes: a carbon precipitation process of bringing a feed gas including a gas containing C as a constituent element into contact with a solid containing Fe as a constituent element to generate a carbon-containing precipitate on a surface of the solid; a process of separating the solid from the carbon-containing precipitate and recovering the carbon-containing precipitate; and an agglomeration process of pressurizing and heating the carbon-containing precipitate to obtain a carbon agglomerate.

## Description

### TECHNICAL FIELD

The present disclosure relates to a method of producing a carbon agglomerate from a gas containing C as a constituent element.

### BACKGROUND

In recent years, there has been a strong demand to reduce carbon dioxide (CO₂) emissions against a backdrop of global environmental issues. Therefore, there is a demand for low reducing agent rate (low RAR) operations in the operation of blast furnaces in steelworks. In a typical blast furnace, hot blast (air heated to about 1200 °C) is blown into the blast furnace as blast gas from a tuyere. This causes the oxygen in the hot blast to react with coke or pulverized coal that serves as the reducing agent, generating carbon monoxide (CO) gas and hydrogen (H₂) gas. The carbon monoxide gas and hydrogen gas reduce the iron ore charged in the blast furnace. Further, carbon dioxide is generated in this iron ore reduction reaction. The blast gas is gas blown into the blast furnace through the tuyere, and also plays a role in gasifying pulverized coal and coke in the blast furnace.

As technology for decreasing carbon dioxide emissions from blast furnace operations, techniques have been proposed to reform carbon monoxide and carbon dioxide contained in by-product gas emitted from blast furnaces and the like to produce hydrocarbons such as methane and ethanol, which are then reintroduced as solid reducing agents in blast furnaces.

For example, in Patent Literature (PTL) 1, a method is proposed to produce solid carbon from CO gas by a reverse water-gas shift reaction according to a Boudouard reaction and hydrogen mixing, which is then circulated to a blast furnace. In particular, PTL 1 proposes a method of using a binder (coal-derived binder or tar) to briquette the solid carbon for return to the blast furnace. However, developing enough strength for a briquette to withstand use in a blast furnace is difficult. Further, PTL 1 lists as a feature that the precipitated solid carbon is pure carbon and low in ash and other impurities.

In PTL 2, a method is proposed to introduce into a blast furnace solid carbon obtained by pyrolysis of methane and solid carbon obtained by the reaction of hydrogen generated during the pyrolysis with carbon dioxide that is a by-product gas from the blast furnace. PTL 2 also proposes briquetting solid carbon using a binder. However, as in the case of PTL 1, there is concern that briquettes volatilize under the high temperatures in a blast furnace with conventional forming using a conventional binder, and developing enough strength to withstand use in a blast furnace is difficult. Therefore, an agglomeration method is needed to join solid carbon by a mechanism other than a binder.

Further, in PTL 3 and PTL 4, methods are proposed of generating solid carbon from CO and CO₂ gas contained in by-product gas, but a method of agglomerating the solid carbon is not described. Hydrogen being included in gas during solid carbon production is also reported.

### CITATION LIST

### Patent Literature

PTL 1: JP S54-150388 A
PTL 2: JP 2021-165214 A
PTL 3: JP 2015-057372 A
PTL 4: JP 2015-516361 A

### SUMMARY

### (Technical Problem)

As described above, a problem with conventional methods of using solid carbon produced from a by-product gas containing C as a constituent element is that a carbon agglomerate having sufficient strength to withstand use in blast furnaces cannot be produced.

For example, when solid carbon produced from a by-product gas is to be used in a blast furnace, solid carbon may be blown in through the tuyere or charged from the top of the furnace. When solid carbon is blown in through the tuyere, the blowing amount is limited, and therefore charging from the top of the furnace allows a larger amount of solid carbon to be used. However, when charging from the top of the furnace, as with conventionally used coke, the solid carbon needs to have a certain size, and needs to have strength enough to avoid being pulverized in the blast furnace. That is, the solid carbon needs to be agglomerated before charging. In particular, in a blast furnace having an internal volume of 1000 m³ or more, the weight of the contents becomes so large that agglomerates having weak strength are likely to be pulverized and scattered in the blast furnace, and aeration in the blast furnace deteriorates due to the generated powder, making operation impossible.

When solid carbon agglomerated by a binder in accordance with a method described in PTL 1 or PTL 2 is charged into a blast furnace, the binder volatilizes due to the heat in the blast furnace, and volatilized components may interfere with the gas recovery process from the blast furnace, and the agglomerate may be pulverized due to the heat and impact in the blast furnace. For this reason, using such agglomerate in large quantities in blast furnaces is difficult, and such agglomerate can only be used in very small blast furnaces. Further, in some cases, after agglomeration with a binder, dry distillation of the agglomerate to increase strength is possible, but this requires careful selection of the type of binder and dry distillation conditions. With typical binders and dry distillation conditions, agglomerate may break up and powderize during dry distillation. Therefore, without specific binders and dry distillation conditions, obtaining agglomerate that can withstand large amounts of use in blast furnaces is not possible. In these respects, conventional technology is inadequate for obtaining agglomerate that can be charged from the top of a blast furnace, and the resulting agglomerate is not suitable for practical use.

In view of the above, it would be helpful to provide a method for producing high-strength carbon agglomerate from a gas containing C as a constituent element.

### (Solution to Problem)

Primary features of the present disclosure are described below.
[1] A method of producing a carbon agglomerate, the method comprising:
   a carbon precipitation process of bringing a feed gas including a gas containing C as a constituent element into contact with a solid containing Fe as a constituent element to generate a carbon-containing precipitate on a surface of the solid;
   a process of separating the solid from the carbon-containing precipitate and recovering the carbon-containing precipitate; and
   an agglomeration process of pressurizing and heating the carbon-containing precipitate to obtain a carbon agglomerate.
[2] The method of producing a carbon agglomerate according to [1], above, wherein the gas includes one or both of CO gas and CH₄ gas.
[3] The method of producing a carbon agglomerate according to [2], above, wherein the feed gas includes the CO gas and hydrogen gas.
[4] The method of producing a carbon agglomerate according to [2], above, wherein the feed gas consists of the CH₄ gas.
[5] The method of producing a carbon agglomerate according to any one of [1] to [4], above, wherein the solid contains one or more selected from the group consisting of sintered ore, iron ore, and reduced iron.
[6] The method of producing a carbon agglomerate according to any one of [1] to [5], above, wherein the carbon precipitation process is carried out at an ambient temperature that is 300 °C or more and 1500 °C or less.
[7] The method of producing a carbon agglomerate according to any one of [1] to [6], above, wherein the carbon-containing precipitate contains 1 mass% or more of T.Fe.
[8] The method of producing a carbon agglomerate according to any one of [1] to [7], above, wherein the agglomeration process is a hot pressing process in which the carbon-containing precipitate is pressurized and heated simultaneously.
[9] The method of producing a carbon agglomerate according to [8], above, wherein the maximum temperature of the carbon-containing precipitate in the hot pressing process is 750 °C or more.
[10] The method of producing a carbon agglomerate according to any one of [1] to [9], above, wherein the agglomeration process is carried out without adding a binder to the carbon-containing precipitate.
[11] The method of producing a carbon agglomerate according to any one of [1] to [10], above, wherein the indirect tensile strength of the carbon agglomerate is 5 MPa or more.

### (Advantageous Effect)

According to the method of producing a carbon agglomerate, a high-strength carbon agglomerate can be produced from a gas containing C as a constituent element.

### BRIEF DESCRIPTION OF THE DRAWINGS

In the accompanying drawings:
FIG. 1 is a schematic diagram illustrating a structure of a reactor used in Examples 1, 2, 4 and Comparative Example 1;
FIG. 2A is a photograph of sintered ore after separating carbon-containing precipitate precipitated in Example 1, and FIG. 2B is a photograph of the carbon-containing precipitate separated from the sintered ore in Example 1;
FIG. 3 is a graph illustrating Raman spectra of carbon-containing precipitate in Example 1;
FIG. 4 is TEM images of carbon-containing precipitate in Example 1;
FIG. 5 is a schematic diagram illustrating structure of an electric furnace used in Example 3;
FIG. 6 is TEM images of carbon-containing precipitate in Example 3;
FIG. 7 is a TEM image of carbon-containing precipitate in Example 4;
FIG. 8 is TEM images of carbon-containing precipitate in Comparative Example 1;
FIG. 9A is a diagram illustrating a procedure of hot press testing, and FIG. 9B is a diagram illustrating a procedure of indirect tensile test;
FIG. 10 is a photograph illustrating appearance of a carbon agglomerate obtained from the carbon-containing precipitate of Example 1 at a forming temperature of 1000 °C;
FIG. 11 is a graph illustrating a relationship between forming temperature and indirect tensile strength for the carbon agglomerate obtained from each of the carbon-containing precipitates of Examples 1 to 3 and carbon black;
FIG. 12 is a graph illustrating a relationship between forming temperature and bulk density for the carbon agglomerate obtained from each of the carbon-containing precipitates of Examples 1 to 3 and carbon black;
FIG. 13 is a low-magnification TEM image of a carbon agglomerate obtained from the carbon-containing precipitate of Example 3 at a forming temperature of 1000 °C;
FIG. 14 is a TEM image magnified frame of FIG. 13;
FIG. 15 is a TEM image of a carbon agglomerate obtained from the carbon-containing precipitate of Example 2 at a forming temperature of 1000 °C;
FIG. 16 is a TEM image magnification of FIG. 15; and
FIG. 17 is a diagram illustrating a mechanism of the reaction that produces tubular or spherical carbon-containing precipitate from CO gas, CO₂ gas, and methane gas.

### DETAILED DESCRIPTION

A method of producing a carbon agglomerate according to an embodiment of the present disclosure includes: a carbon precipitation process of bringing a feed gas including a gas containing C as a constituent element into contact with a solid containing Fe as a constituent element to generate a carbon-containing precipitate on a surface of the solid; a process of separating the solid from the carbon-containing precipitate and recovering the carbon-containing precipitate; and an agglomeration process of pressurizing and heating the carbon-containing precipitate to obtain a carbon agglomerate.

### [Feed gas]

The feed gas includes a gas containing C as a constituent element. Gas containing C as a constituent element is not particularly limited, but preferably includes one or more selected from the group consisting of CO, CO₂, and CH₄. The gas containing C as a constituent element more preferably includes one or both of CO gas and CH₄ gas. The feed gas may consist of a gas containing C as a constituent element, and may consist of a gas containing C as a constituent element and another gas. The content of the gas containing C as a constituent element in the feed gas may be 1 vol% or more and 100 vol% or less. The other gas preferably consists of one or both H₂ and N₂. In particular, the feed gas preferably includes hydrogen, as then fibrous carbon is easily produced. H₂ content in the feed gas is preferably 1 vol% or more and 50 vol% or less. As the feed gas, specifically, by-product gases in steelworks, in particular blast furnace gas and converter gas, are advantageously suited. The feed gas preferably includes CO gas and hydrogen gas. The feed gas preferably consists of CH₄ gas.

### [Solid containing Fe as a constituent element]

As the solid containing Fe as a constituent element, examples include metallic iron and iron oxide. The solid containing Fe as a constituent element preferably includes one or more selected from the group consisting of sintered ore, iron ore, and reduced iron (pure iron). T.Fe content in the solid is preferably 1 mass% or more. T.Fe content in the solid is more preferably 50 mass% or more. Even when a large amount of Fe is contained, obtaining carbon is possible, and agglomerating the carbon is possible. An upper limit of T.Fe content in the solid is not particularly limited, and the T.Fe content may be 99.9 mass% or less. The solid containing Fe as a constituent element includes, as an Fe source, one or more selected from the group consisting of pure iron (M.Fe), FeO, Fe₂O₃, Fe₃O₄, and other Fe compounds. Examples of other Fe compounds include metallic iron with one or both of Si and S in solid solution, and calcium ferrite, a compound of calcium and iron oxide. The solid containing Fe as a constituent element is composed of these Fe sources and other components. Examples of other components include Si, Ca, Al, Mg, P, S, Na, K, Mn, Ti, Zn, V, Ni, and the like.

The particle size of the solid containing Fe as a constituent element is not particularly limited, but the particle size is preferably distributed in a range from more than 5 mm to 80 mm or less, such that the solid can support an appropriate amount of carbon-containing precipitate. In the present disclosure, "particle size" corresponds to the nominal mesh size of a sieve mesh in accordance with Japanese Industrial Standard JIS Z 8801:2019. That is, solids having a particle size greater than X mm are those that remain on the sieve when sifted through a sieve having a nominal mesh size of X mm. Solids having a particle size of Y mm or less are those that pass through the sieve and fall under the sieve when sifted through a sieve having a nominal mesh size of Y mm.

### [Carbon precipitation process]

The feed gas including a gas containing C as a constituent element as described above is brought into contact with the solid containing Fe as a constituent element as described above to generate the carbon-containing precipitate on the surface of the solid. That is, when the solid containing Fe is used as a catalyst to produce carbon-containing precipitate from the gas containing C, fibrous carbon is produced in the carbon-containing precipitate. Then, when the carbon-containing precipitate is agglomerated, entanglement of the fibrous carbon occurs, which promotes bonding of particles of the carbon-containing precipitate. When fracturing the carbon agglomerate, the fibers need to be severed or pulled out, which is expected to contribute to an increase in the strength of the carbon agglomerate.

The carbon-containing precipitate consists of solid carbon (C) and other components. The solid carbon (C) content in the carbon-containing precipitate may be 10 mass% or more and 99 mass% or less. The other components are derived from the solid containing Fe as a constituent element, used as a catalyst, and are one or more selected from the group consisting of pure iron (M.Fe), FeO, Fe₂O₃, Fe₃O₄, other Fe compounds, and Si, Ca, Al, Mg, P, S, Na, K, Mn, Ti, Zn, V, Ni, and compounds thereof. Examples of the other Fe compounds (Fe compounds other than oxides) mentioned above include metallic iron with one or both of Si and S in solid solution, and calcium ferrite, a compound of calcium and iron oxide. T.Fe content in the carbon-containing precipitate is preferably 1 mass% or more. This results in the carbon-containing precipitate having fibrous or tubular carbon growth with the iron particles as initiation points. An upper limit of T.Fe content in the carbon-containing precipitate is not particularly limited. The T.Fe content may be 50 mass% or less.

Reactions to produce solid carbon from CO₂ gas, CO gas, or CH4 gas are not particularly limited, but the following reactions are examples.

### [Reactions to produce solid carbon from CO gas]

Solid carbon may be produced from CO gas by the Boudouard reaction indicated by reaction equation (1). The Boudouard reaction can produce solid carbon from CO gas at temperatures of about 700 °C or less.

2CO = C + CO₂ ... (1)

Solid carbon may be produced from CO gas by the reverse water-gas shift reaction indicated by reaction equation (2). The reverse water-gas shift reaction can produce solid carbon from CO gas at temperatures of about 650 °C or less.

CO + H₂ = C + H₂O ... (2)

CH₄ gas may be produced from CO gas by the methanation reaction indicated by reaction equation (3), and solid carbon may be produced from CH₄ gas by the pyrolysis reaction indicated by reaction equation (4). The methanation reaction can produce CH₄ gas from CO gas at temperatures of about 650 °C or less, and the pyrolysis reaction can produce solid carbon from CH₄ gas in air at temperatures or about 500 °C or more.

CO + 3H₂ = CH₄ + H₂O ... (3)

CH₄ = C + 2H₂ ... (4)

Solid carbon may be produced from CO gas by the decomposition reaction indicated by reaction equation (5). The decomposition reaction can produce solid carbon from CO gas under low oxygen partial pressure.

2CO = 2C + O₂ ... (5)

### [Reactions to produce solid carbon from CO₂ gas]

Solid carbon may be produced from CO₂ gas by the reverse water-gas shift reaction indicated by reaction equation (6). The reverse water-gas shift reaction can produce solid carbon from CO₂ gas at temperatures of about 650 °C or less.

CO₂ + 2H₂ = C + 2H₂O ... (6)

CO gas may be produced from CO₂ gas by the reverse water-gas shift reaction indicated by reaction equation (7), and solid carbon may be produced from CO gas by the reverse water-gas shift reaction indicated by reaction equation (2). The reverse water-gas shift reaction can produce CO gas from CO₂ gas at temperatures of about 850 °C or more.

CO₂ + H₂ = CO + H₂O ... (7)

CO + H₂ = C + H₂O ... (2)

CH₄ gas may be produced from CO₂ gas by the methanation reaction indicated by reaction equation (8), and solid carbon may be produced from CH₄ gas by the pyrolysis reaction indicated by reaction equation (4). The methanation reaction can produce CH₄ gas from CO₂ gas at temperatures of about 600 °C or less.

CO₂ + 4H₂ = CH₄ + 2H₂O ... (8)

CH₄ = C + 2H₂ ... (4)

Solid carbon may be produced from CO₂ gas by the decomposition reaction indicated by reaction equation (9). The decomposition reaction can generate solid carbon from CO₂ gas under low oxygen partial pressure.

CO₂ = C + O₂ ... (9)

### [Reaction to produce solid carbon from CH₄ gas]

Solid carbon may be produced from CH₄ gas by the pyrolysis reaction indicated by reaction equation (4).

CH₄ = C + 2H₂ ... (4)

The carbon precipitation process is preferably carried out at an ambient temperature that is 300 °C or more and 1500 °C or less. When the ambient temperature is less than 300 °C, the precipitation rate of carbon-containing precipitate is not sufficient. Therefore, the ambient temperature is preferably 300 °C or more. The ambient temperature is more preferably 400 °C or more. On the other hand, when the ambient temperature exceeds 1500 °C, precipitated carbon becomes difficult to bond, making obtaining a high-strength carbon agglomerate difficult. Therefore, the ambient temperature is preferably 1500 °C or less. The ambient temperature is more preferably 1000 °C or less.

The temperature of the feed gas supplied to the Fe-containing solid in the carbon precipitation process is not particularly limited and may be room temperature (for example, 10 °C or more and 35 °C or less). However, the temperature of the feed gas is not limited to room temperature, and may be heated to any temperature up to the ambient temperature.

The carbon precipitation process is preferably carried out in an atmosphere that is substantially free of oxygen gas. This means both that the feed gas supplied to a solid containing Fe does not contain oxygen gas (O₂) to prevent oxidation and combustion of carbon and that the furnace atmosphere does not contain oxygen to prevent combustion of carbon. The term "atmosphere that is substantially free of oxygen gas" means an atmosphere in which oxygen gas content is decreased to 5 vol% or less.

The reaction time (feed gas flow time) for the carbon precipitation process is not particularly limited. The reaction time is preferably 10 min or more. The reaction time is preferably 480 min or less. When the reaction time is 10 min or more, the reaction time is sufficient to obtain a sufficient amount of carbon-containing precipitate. When the reaction time is 480 min or less, the process can be prevented from becoming too long.

### [Separation and recovery process]

The solid containing Fe as a constituent element is then separated from the carbon-containing precipitate, and the carbon-containing precipitate is recovered. Specifically, the carbon-containing precipitate is separated from the solid by sifting the solid with the carbon-containing precipitate attached using a sieve having an appropriate mesh size. Carbon-containing precipitate is a fine powder. Therefore, by using a sieve having a mesh size smaller than the particle size of the solid containing Fe and larger than the particle size of the carbon-containing precipitate, the solid containing Fe can be left on the sieve and the carbon-containing precipitate can fall below the sieve. The particle size of the carbon-containing precipitate is not particularly limited. For example, the percentage of particles having a particle size greater than 0.1 µm and less than 100 µm may be more than 90 % according to laser diffraction particle size distribution measurement (wet method). The mesh size of the sieve can be selected according to the particle size of the solid containing Fe as a constituent element, for example, in a range from 0.1 mm to 10 mm.

### [Agglomeration process]

The carbon-containing precipitate is then pressurized and heated to obtain a carbon agglomerate. That is, the carbon-containing precipitate obtained in the carbon precipitation process is particulate when produced, and therefore it is necessary to promote bonding by pressurization and heating to achieve agglomeration.

Specifically, the carbon-containing precipitate is preferably heated to a temperature of 400 °C or more for agglomeration. That is, when the heating temperature is 400 °C or more, a carbon bonding reaction rate is markedly increased. The heating temperature is more preferably 750 °C or more. The heating temperature is even more preferably 1000 °C or more. On the other hand, an upper limit of the heating temperature is not particularly limited. From the viewpoint of apparatus protection, the heating temperature is preferably 2000 °C or less.

A preferred embodiment of the agglomeration process is a hot pressing process in which the carbon-containing precipitate is pressurized and heated simultaneously. In the hot pressing process, the carbon-containing precipitate is pressurized and formed while being heated in an oxygen-deprived atmosphere to obtain a carbon agglomerate. The oxygen-deprived atmosphere is an atmosphere in a space through which an inert gas such as nitrogen flows.

In the hot pressing process, the temperature of the carbon-containing precipitate at the time the pressurization of the carbon-containing precipitate is started is referred to as the "forming start temperature" and the maximum temperature of the carbon-containing precipitate during the pressurization period is referred to as the "forming temperature".

The forming start temperature in the hot pressing process is not particularly limited. The forming start temperature is typically room temperature (for example, 10 °C or more and 35 °C or less). This allows a wider temperature range for the carbon-containing precipitate in the hot pressing process and a longer reaction time.

From the viewpoint of achieving high strength of the carbon agglomerate, the maximum temperature of the carbon-containing precipitate in the hot pressing process (forming temperature) is preferably 400 °C or more. The forming temperature is more preferably 750 °C or more. The forming temperature is even more preferably 1000 °C or more. From the viewpoint of protection of hot pressing apparatus, the forming temperature is preferably 2000 °C or less.

The heating rate from the forming start temperature to the forming temperature is preferably 1 °C/min or more. The heating rate is preferably 30 °C/min or less. By setting the heating rate to be 1 °C/min or more and 30 °C/min or less, a strength decrease can be avoided.

In the hot pressing process, the pressure that is mechanically applied to the carbon-containing precipitate is referred to as forming pressure. From the viewpoint of realizing high strength of the carbon agglomerate, the forming pressure is preferably 10 kPa or more. The forming pressure is more preferably 20 MPa or more. From the viewpoint of production cost, the forming pressure is preferably 300 MPa or less.

Another embodiment of the agglomeration process is a process in which the carbon-containing precipitate is compressed and formed at room temperature (for example, from 10 °C to 35 °C) to obtain a formed product, and then the formed product is dry distilled to form a carbon agglomerate. The preferred forming pressure during the compression forming is the same as the forming pressure in the hot pressing process described above. Further, the preferred dry distillation temperature during the dry distillation is the same as the forming temperature in the hot pressing process described above.

The agglomeration process is preferably carried out without the addition of a binder to the carbon-containing precipitate. This avoids binder from volatilizing due to the heat in a blast furnace and volatilized components interfering with a gas recovery process from the blast furnace, and helps avoid the carbon agglomerate being pulverized due to the heat and impact in the blast furnace.

According to the present embodiment, "carbon agglomerate" is a mainly carbon agglomerate produced by the production method according to the present embodiment, and has a composition equivalent to the composition of the carbon-containing precipitate described above. The shape and size of the carbon agglomerate is not particularly limited. Examples of shape include cylindrical, almond-shaped, pillow-shaped, pellet-shaped, and the like, and the size may be 10 mm to 100 mm in diameter and 5 mm to 100 mm in height. The indirect tensile strength of the carbon agglomerate obtained according to the present embodiment is preferably 1 MPa or more. The indirect tensile strength is more preferably 5 MPa or more. When the indirect tensile strength is 1 MPa or more, the carbon agglomerate is able to withstand handling when transported on a belt conveyor. When the indirect tensile strength is 5 MPa or more, the carbon agglomerate is able to withstand charging from the top of a blast furnace and subsequent use. The carbon agglomerate can be used not only in a blast furnace but also as a carbon material by itself. Accordingly, the method according to the present disclosure may be effectively used as a method of producing a carbon material with low CO₂ emission.

### EXAMPLES

[Formation of carbon-containing precipitate]

### (Example 1)

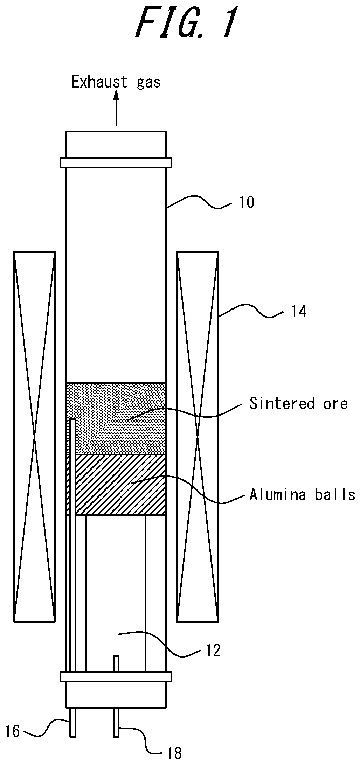

A vertical reactor was used to produce carbon-containing precipitate from CO gas. FIG. 1 illustrates a schematic diagram of a vertical reactor. An alumina support 12, alumina balls, and 500 g of sintered ore were charged in this order into a furnace core tube 10 having an inner diameter of 80 mm. The composition of the sintered ore used here is listed in Table 1 below. The particle size of the sintered ore was greater than 15 mm and 21 mm or less (15 mm sieve pass rate: 0 %, 21 mm sieve pass rate: 100 %). A heater 14 brought the ambient temperature in the furnace core tube 10 to 800 °C, as measured by a thermocouple 16. Subsequently, feed gas at room temperature having a composition, in vol%, of CO: 31 %, H₂: 19 %, and N₂: 50 % was flowed from a gas inlet pipe 18 located below the reactor into the furnace core tube 10 at a flow rate of 17 NL/min (flow rate per minute of gas volume converted to standard conditions (0 °C, 1 atm)) for 3 h, to bring the feed gas into contact with the sintered ore for 3 h. The alumina balls served to maintain the temperature in the furnace core tube, and the sintered ore, due to the iron content therein, functioned as a catalyst for the formation of carbon-containing precipitate. In this process, carbon-containing precipitate was formed on the sintered ore.

**[Table 1]**

| Table 1 | | | | | | | (mass%) |
|---|---|---|---|---|---|---|---|
| T.Fe | Fe₂O₃ | FeO | M.Fe | CaO | SiO₂ | Al₂O₃ | MgO |
| 54.9 | 70.1 | 6.5 | 0.8 | 11.4 | 6.2 | 1.9 | 2.0 |

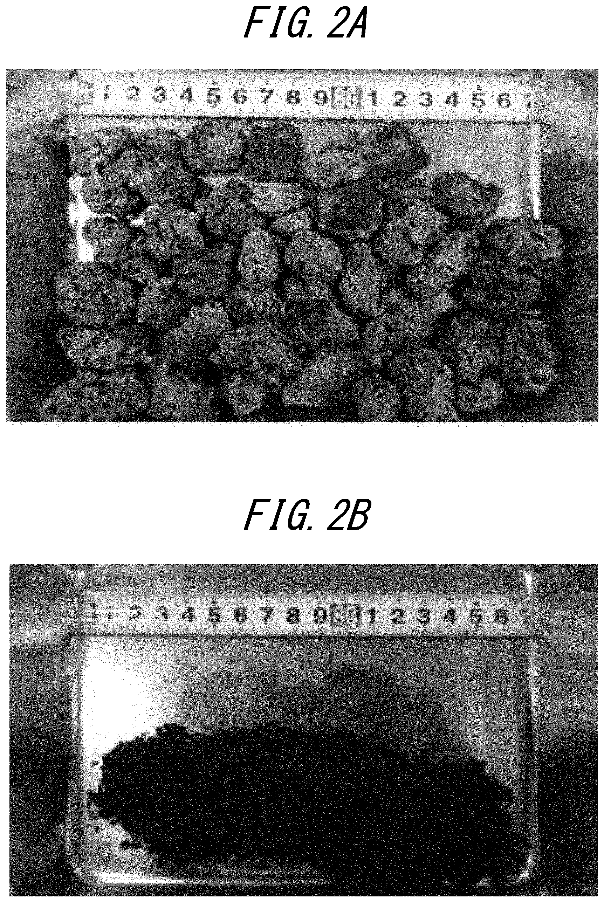

The sintered ore with carbon-containing precipitate attached was then recovered from the reactor, and the carbon-containing precipitate and the sintered ore were separated by sieving with a sieve having a mesh size of 0.125 mm, and recovered. The carbon-containing precipitate was fine powder and was easily separated from the sintered ore by the sieving operation. FIG. 2A is a photograph of the sintered ore after separating the precipitated carbon-containing precipitate, and FIG. 2B is a photograph of the carbon-containing precipitate separated from the sintered ore. The particle size distribution of the carbon-containing precipitate, as measured by a laser diffraction particle size distribution analyzer, in mass%, was 2.1 µm at D10, 6.61 µm at D50, and 14.8 µm at D90.

The amount of carbon-containing precipitate was 11 g relative to 500 g of the sintered ore before processing. The chemical analysis values of the carbon-containing precipitate are listed in Table 2, and the carbon content in the carbon-containing precipitate was 72.0 mass%, indicating that the precipitate was mainly composed of C. When the weight of the sintered ore before processing is considered to be 100, the amount of carbon produced was 1.5.

**[Table 2]**

| Table 2 | | | (mass%) |
|---|---|---|---|
| T.Fe | M.Fe | FeO | C |
| 13.6 | 7.8 | 7.2 | 72.0 |

The amount of C in the carbon-containing precipitate (that is, carbon yield) relative to the amount of carbon in the flowed through feed gas was 1.1 %.

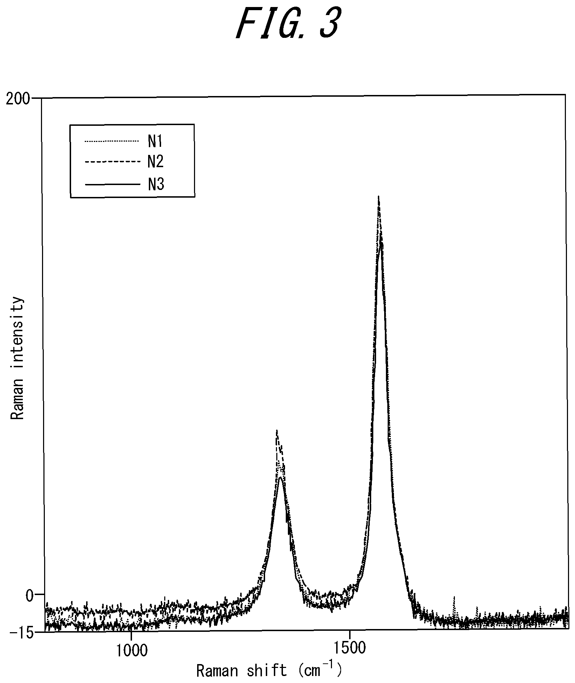

The Raman spectra of three samples (N1, N2, and N3) taken from the carbon-containing precipitate were measured by conventional Raman spectroscopy using RAMANforce, produced by Nanophoton Corp., and the results are illustrated in FIG. 3. As illustrated in FIG. 3, a large, sharply developed peak in the vicinity of 1600 cm⁻¹ that represents crystallinity, known as the G band, indicates that the carbon-containing precipitate contains highly crystalline carbon.

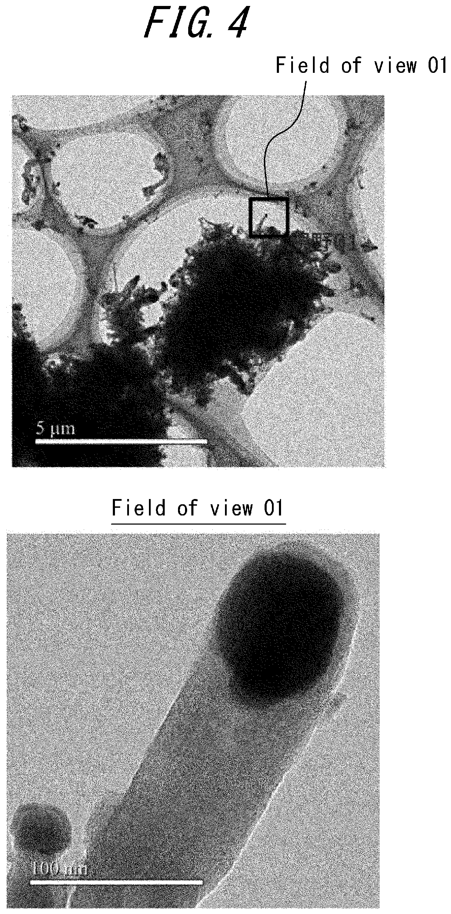

FIG. 4 illustrates transmission electron microscopy (TEM) images of the carbon-containing precipitate. FIG. 4 illustrates that the carbon-containing precipitate is mainly fibrous development of carbon from iron particles (black particles in the lower image). Further, the Raman spectra illustrated in FIG. 3 clearly indicate that the carbon is highly crystalline, which suggests that the fiber has excellent strength.

### (Example 2)

Carbon-containing precipitate was produced on the sintered ore and the carbon-containing precipitate and the sintered ore were separated and recovered by the same method as in Example 1, except that the ambient temperature in the furnace core tube was changed from 800 °C to 550 °C and the reaction time was changed from 3 h to 40 min. In this case, the carbon yield was 8.7 %.

### (Example 3)

An electric furnace was used to produce carbon-containing precipitate from methane gas. Methane pyrolyzes at temperatures of 500 °C or more, precipitating solid carbon as indicated by the following expression.

CH₄ → C + 2H₂

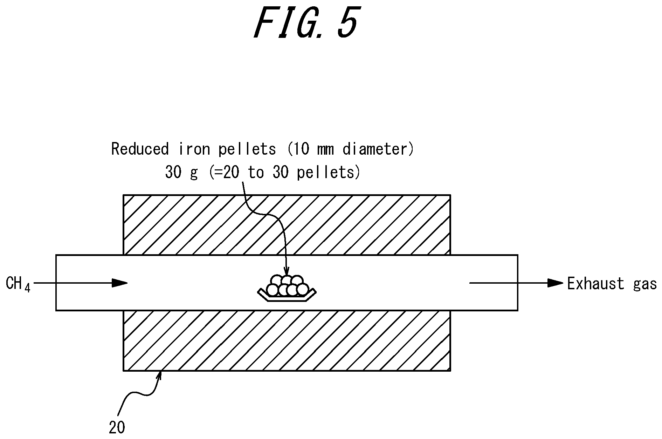

FIG. 5 is a schematic diagram of the electric furnace. 30 g of reduced iron pellets, which were reduced from iron ore pellets, were charged into the electric furnace 20. The composition of the reduced iron pellets used here is listed in Table 3 below. The reduced iron pellets had a 10 mm diameter particle size. The ambient temperature in the electric furnace 20 was set at 900 °C. Then, ambient temperature feed gas consisting of 100 vol% methane gas was flowed into the electric furnace 20 at a flow rate of 10 NL/min for 1 h. The iron content in the reduced iron pellets functioned as a catalyst for the formation of carbon-containing precipitate. In this process, carbon-containing precipitate was formed on the reduced iron pellets.

**[Table 3]**

| Table 3 | | | (mass%) | |
|---|---|---|---|---|
| M.Fe | FeO | SiO₂ | CaO | T.Fe |
| 89.4 | 1.9 | 3.1 | 3.2 | 90.9 |

The reduced iron pellets with carbon-containing precipitate attached were then recovered from the electric furnace and the carbon-containing precipitate and the reduced iron pellets were separated by sieving through a sieve having a mesh size of 0.125 mm, and recovered. The carbon-containing precipitate was fine powder and was easily separated from the reduced iron pellets by the sieving operation. The carbon yield was about 1 %.

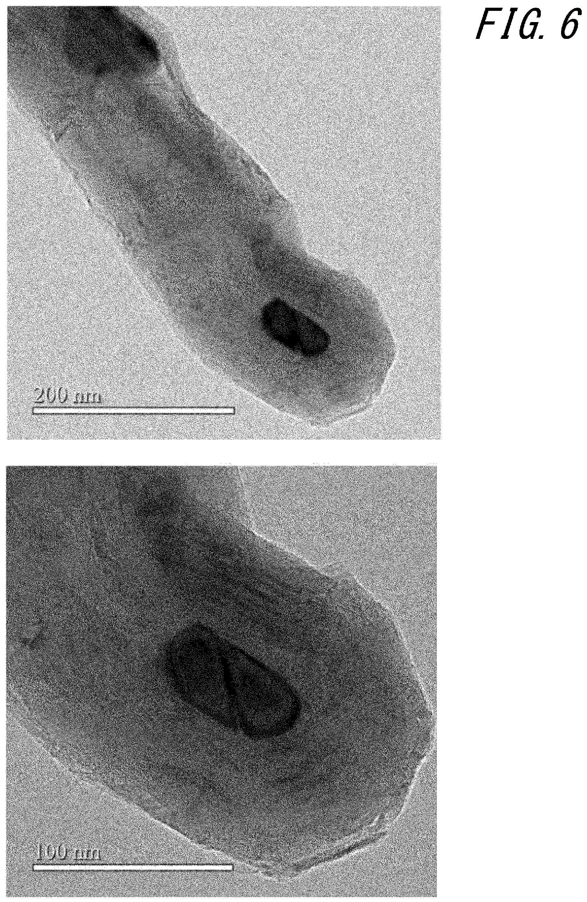

FIG. 6 illustrates TEM images of the carbon-containing precipitate. The black particles in the image are iron particles, from which fibrous carbon developed.

### (Example 4)

Carbon-containing precipitate was formed on iron ore pellets by the same method as in Example 1, except that feed gas having a composition, in vol%, of CO: 30 % and N₂: 70 % was used, iron ore pellets were used instead of sintered ore, the ambient temperature in the furnace core tube was 550 °C, and the reaction time was 30 min. The chemical analysis values of the iron ore pellets used here are listed in Table 4 below. The particle size of the iron ore pellets was greater than 9 mm and 12 mm or less (9 mm sieve pass rate: 0 %, 12 mm sieve pass rate: 100 %). The carbon-containing precipitate and iron ore pellets were separated and recovered. The amount of carbon-containing precipitate produced in this process was small, and therefore this process was repeated ten times to obtain sufficient production for the agglomeration test described below. The same iron ore pellets were used repeatedly.

**[Table 4]**

| Table 4 | | | | | | (mass%) |
|---|---|---|---|---|---|---|
| T.Fe | Fe₂O₃ | FeO | CaO | SiO₂ | Al₂O₃ | MgO |
| 65.1 | 91.2 | 1.2 | 3.1 | 2.7 | 0.4 | 0.2 |

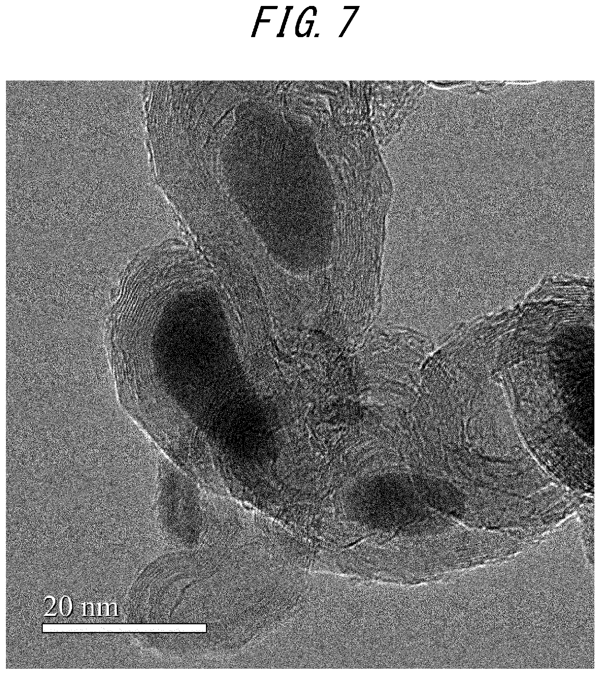

FIG. 7 illustrates a TEM image of the carbon-containing precipitate. The carbon-containing precipitate was in the form of particulate carbon surrounding iron particles (black particles in the image).

### (Comparative Example 1)

The reactor illustrated in FIG. 1 was used to produce carbon-containing precipitate on alumina balls instead of sintered ore. 500 g of alumina balls were charged onto the alumina support 12 of the furnace core tube 10 having an inner diameter of 80 mm to form a soaking zone having a height of about 50 mm. The alumina balls had a 6 mm diameter particle size. The ambient temperature in the furnace core tube 10 was set to 1400 °C, then feed gas at room temperature, consisting of 100 vol% methane gas, was flowed from the gas inlet pipe 18 into the furnace core tube 10 at a flow rate of 1.0 NL/min for 1 h. In this process, carbon-containing precipitate was formed on the alumina balls.

The alumina balls with carbon-containing precipitate attached were then recovered from the reactor, and the carbon-containing precipitate and the alumina balls were separated by sieving with a sieve having a mesh size of 0.125 mm, and recovered. The carbon-containing precipitate was fine powder and was easily separated from the alumina balls by the sieving operation.

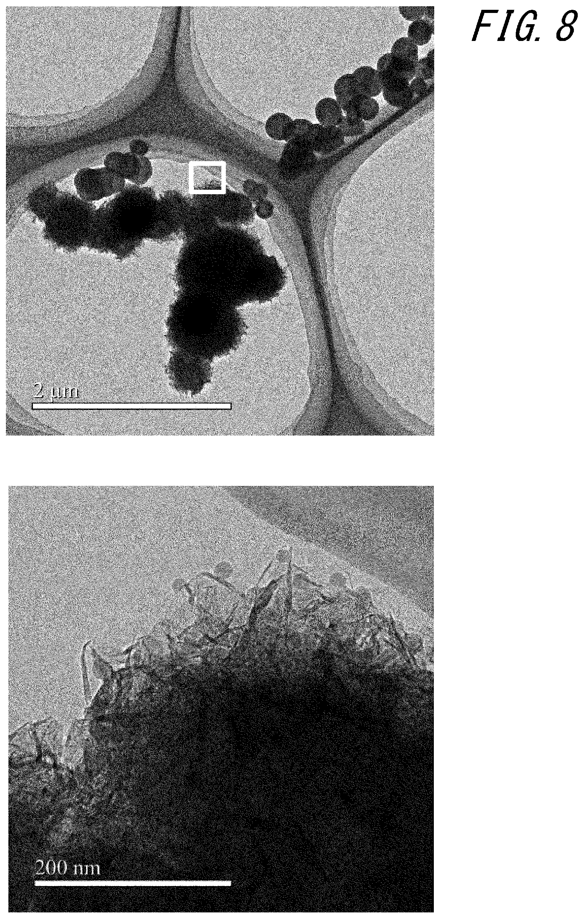

FIG. 8 illustrates TEM images of the carbon-containing precipitate. The low-magnification upper image of FIG. 8 illustrates that the carbon-containing precipitate was particulate, with much of the carbon-containing precipitate having a hairball-like structure. The lower TEM image of FIG. 8, which magnifies the carbon-containing precipitate having the hairball-like structure (the framed area in the upper part of FIG. 8), illustrates that the carbon-containing precipitate had a structure that had many edges.

### [Agglomeration of carbon-containing precipitate]

The following hot pressing process was used to agglomerate (coke) the carbon-containing precipitate obtained in the processes described above. Hot pressing is a forming method in which carbon-containing precipitate is heated under pressure, and this method can be used to produce high-strength carbon agglomerate (coke) from carbon-containing precipitate. Note that binder is not necessarily required in the agglomeration by hot pressing. The ability to obtain high-strength carbon agglomerate without binder is one of the features newly discovered by the inventors.

### (Example 1)

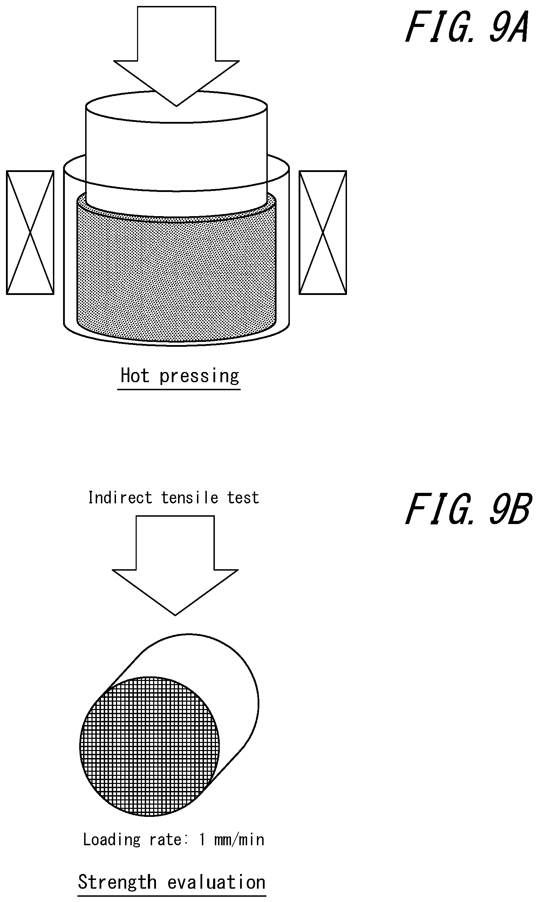

FIG. 9A and FIG. 9B illustrate an overview of the hot pressing test. 1.32 g of the carbon-containing precipitate obtained for Example 1 was filled into a mold having a diameter of 12 mm illustrated in FIG. 9A, and the carbon-containing precipitate was pressure formed. The forming start temperature was set at room temperature, and the carbon-containing precipitate was heated up at a heating rate of 20 °C/min until the maximum temperature (forming temperature) listed in Table 5 was reached, while applying a forming pressure of 50 MPa under nitrogen gas flow. Further, the carbon-containing precipitate was held at the forming temperature for 5 min. The resulting carbon agglomerate was then allowed to cool down and recovered.

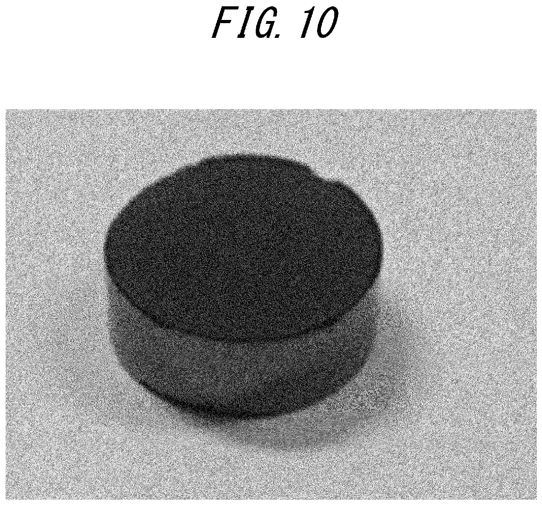

Indirect tensile strength measurements were carried out on the resulting carbon agglomerate, as illustrated in FIG. 9B. Specifically, indirect tensile strength was measured by the method described in Non-Patent Literature "Tsugio Miyagawa et al, A Study on The Tensile Strength of Coke (I), Journal of the Fuel Society of Japan, Vol. 54, No. 584, 1975, P983-993". Conventional coke (lump coke for steelmaking obtained by dry distillation of coal) produced in steelworks was used for comparison, and indirect tensile strength of the lump coke was also measured. Carbon agglomerate produced at a forming temperature of 1000 °C had the appearance illustrated in FIG. 10.

Visual evaluation results of the success or failure of agglomeration and values of indirect tensile strength are listed in Table 5. Agglomeration was successfully achieved in all tests at forming temperatures of 1000 °C or more. Further, the carbon agglomerates produced according to the present disclosure were found to exhibit higher indirect tensile strength without binder than conventional coke.

**[Table 5]**

| Table 5 | | | | |
|---|---|---|---|---|
| Forming temperature (Maximum temperature) | 1000 °C | 1250 °C | 1500 °C | Conventional coke |
| Agglomeration | Success | Success | Success | |
| Indirect tensile strength (MPa) | 10.8 | 12.9 | 9.1 | 5.2 |

### (Examples 1 to 3)

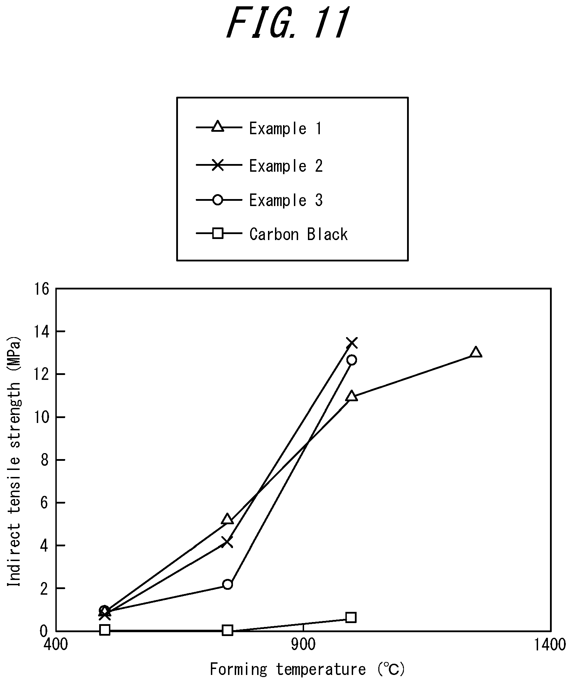

The carbon-containing precipitates obtained in Examples 1 to 3 and carbon black were subjected to hot pressing at four forming temperatures of 500 °C, 750 °C, 1000 °C, and 1250 °C to obtain carbon agglomerates. Other conditions were the same as described above. The indirect tensile strength of the resulting carbon agglomerates was measured. FIG. 11 illustrates the results of indirect tensile strength measurements. It was found that the higher the forming temperature, the higher the indirect tensile strength tended to be.

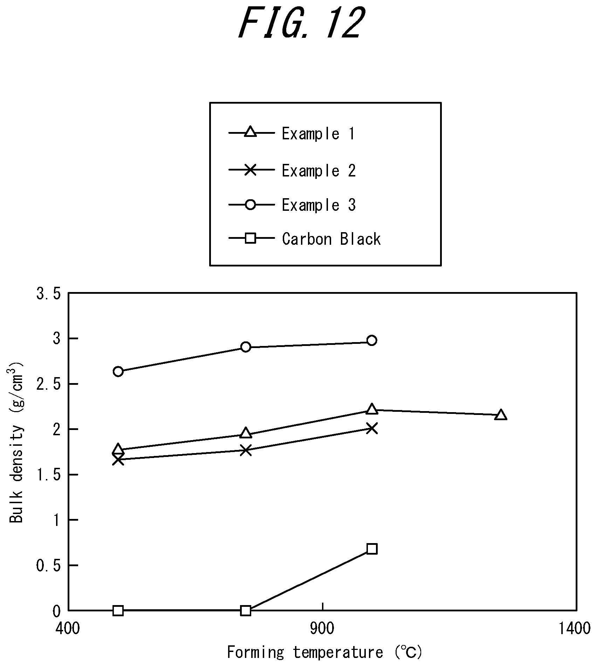

Further, bulk density of the resulting carbon agglomerates was measured, and the results are illustrated in FIG. 12. Bulk density was determined by measuring the diameter and height of the carbon agglomerate, calculating the volume, and dividing the weight by the volume.

As illustrated in FIG. 12, the carbon agglomerate of Example 3 produced from CH₄ gas is slightly denser than the carbon agglomerates of Examples 1 and 2 produced from CO gas. However, as illustrated in FIG. 11, there is no significant difference in indirect tensile strength between Examples 1 to 3, and the method of the present disclosure can be implemented using a variety of feed gases. The carbon black agglomerate had low bulk density and low indirect tensile strength. Carbon black is carbon formed by incomplete combustion in the presence of oxygen and is structurally different from the carbon-containing precipitate of the present disclosure, which is formed in an atmosphere substantially free of oxygen. This may be the reason for the lower indirect tensile strength of the carbon black agglomerate.

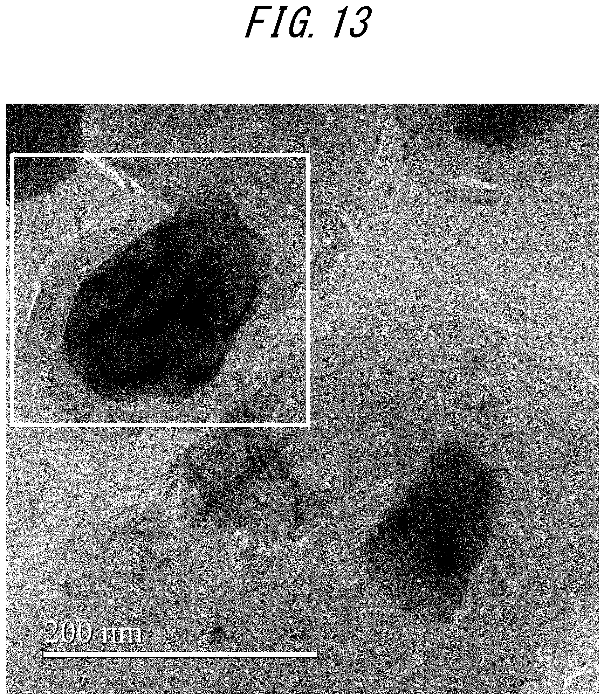

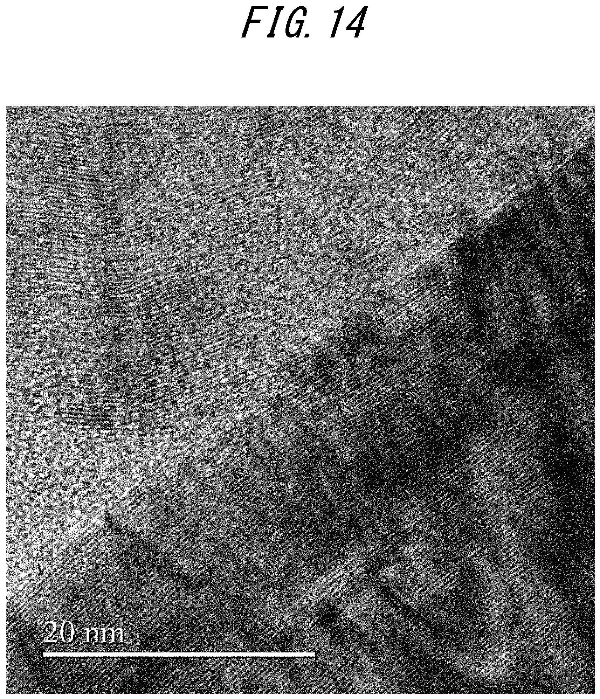

FIG. 13 is a low-magnification TEM image of a carbon agglomerate obtained by hot pressing the carbon-containing precipitate of Example 3 with the forming temperature at 1000 °C and other conditions the same as described above. The black material is iron, which is surrounded by carbon, indicating that iron is not bonded to iron, and carbon is bonded to carbon. Further, FIG. 14 is a TEM image of a magnified area (frame) where carbon is bonded to carbon. The observation result indicates that the carbon has a multi-layer carbon nanotube-like structure and is joined by SP² bonds in the layering direction.

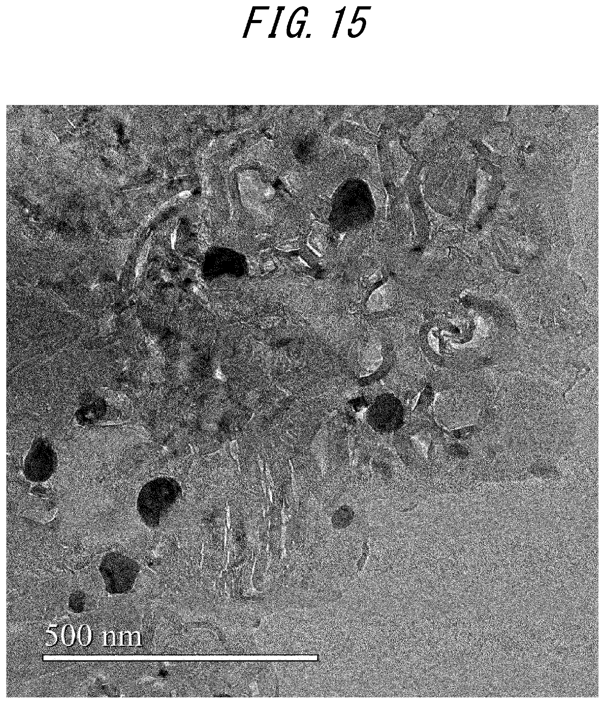

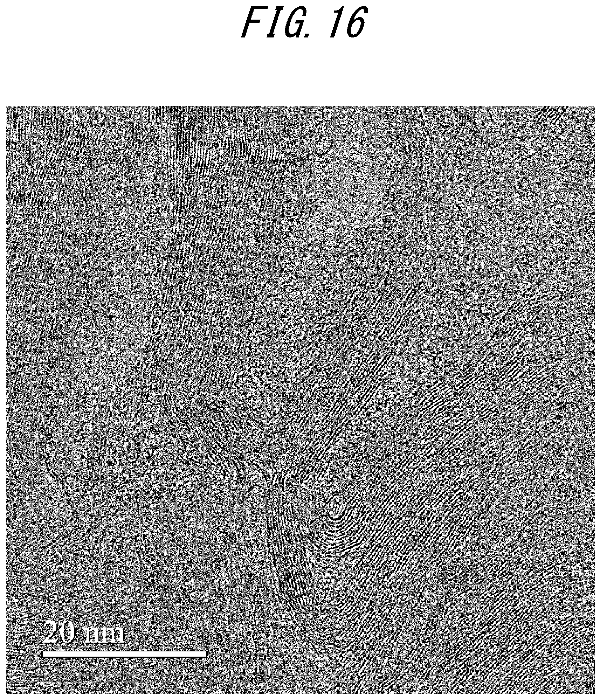

FIG. 15 is a TEM image of a carbon agglomerate obtained by hot pressing the carbon-containing precipitate of Example 2 with the forming temperature at 1000 °C and other conditions the same as described above. This carbon agglomerate was also found to have no areas where the iron, which is black, was bonded to iron, and the carbon was found to be bonded to carbon. FIG. 16 is a magnified TEM image of a carbon-to-carbon joined portion. As in FIG. 14, carbon was joined to carbon by SP² bonds. These results indicate that the bonding between the particles of carbon-containing precipitate in the carbon agglomerate is due to carbon-to-carbon bonding.

The inventors have examined the reasons why the carbon black bonding is insufficient in the carbon black agglomerate, in contrast to the sufficient bonding of carbon-containing precipitate in the carbon agglomerate produced according to the present disclosure. The carbon-containing precipitate of Examples 1 to 3 has a feature of a fibrous, tubular, or spherical structure, surrounding iron particles. In the case of tubes and spheres, the planes of the layered structure always face each other when the carbon-containing precipitate particles are close to each other. Therefore, carbon-to-carbon bonding is possible by bringing the particles closer together through pressure and promoting bonding through heating. In contrast, carbon black is known to be composed of crystallites within particles. In other words, carbon black is a material having many edges. It may be that sufficient agglomeration was not possible because SP² binding was not possible at these edges.

### (Example 4)

The carbon-containing precipitate of Example 4 was subjected to hot pressing at two forming temperatures of 750 °C and 1000 °C to obtain carbon agglomerates, with the other conditions being the same as described above. Both conditions resulted in successful agglomeration. Indirect tensile strength was 7.1 MPa when the forming temperature was 750 °C and 13.0 MPa when the forming temperature was 1000 °C, and therefore sufficiently high strength was obtained.

### (Comparative Example 1)

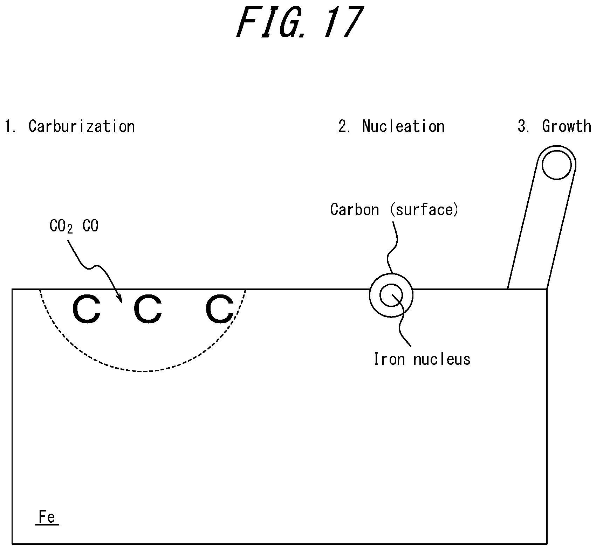

The following explains the need for the formation of carbon-containing precipitate on a solid containing Fe as a constituent element. The reaction that produces tubular or spherical carbon-containing precipitate from CO gas, CO₂ gas, and methane gas may be the mechanism illustrated in FIG. 17. First, C carburizes into the iron, and then the carbon that could not be solidly dissolved precipitates from the iron nuclei and grows as fibers. In this case, spherical carbon can also occur during the nucleation stage. Thus, fibers grow by having iron nuclei, and therefore Fe is necessary according to the present disclosure. Such tubular or spherical carbon is difficult to form at high temperatures, and precipitation reactions from the gas phase to the solid phase occur.

On the other hand, when the carbon-containing precipitate precipitated on alumina balls in Comparative Example 1 was subjected to hot pressing at forming temperatures of 500 °C to 1000 °C, with other conditions the same as described above, agglomeration did not occur at any forming temperature. That is, carbon-containing precipitate formed on Fe-containing solids have better formability than carbon-containing precipitate formed on Fe-free solids, and therefore use of carbon-containing precipitate formed on a Fe-containing solid is necessary to achieve agglomeration.

### (Example 2)

An agglomeration method other than hot pressing was implemented. The carbon-containing precipitate obtained in Example 2 was compression formed (without binder) at room temperature (25 °C), and the formed product was dry distilled (dry distillation temperature: 1000 °C) under atmospheric pressure to obtain a carbon agglomerate. As a result, after dry distillation, the carbon agglomerate developed visible cracks, and the indirect tensile strength was as low as 1.2 MPa. The results indicated that hot pressing is superior for agglomeration according to the present disclosure. However, as long as indirect tensile strength is 1 MPa or more, handling such as being transported on a belt conveyor may be withstood. Therefore, as a method for producing a carbon agglomerate having excellent handleability, a method in which carbon-containing precipitate is compression formed to obtain a formed product and then dry-distilled under atmospheric pressure can be effectively used.

### INDUSTRIAL APPLICABILITY

According to the method of producing a carbon agglomerate, a high-strength carbon agglomerate can be produced from a gas containing C as a constituent element.

## Claims

1. A method of producing a carbon agglomerate, the method comprising:
a carbon precipitation process of bringing a feed gas including a gas containing C as a constituent element into contact with a solid containing Fe as a constituent element to generate a carbon-containing precipitate on a surface of the solid;
a process of separating the solid from the carbon-containing precipitate and recovering the carbon-containing precipitate; and
an agglomeration process of pressurizing and heating the carbon-containing precipitate to obtain a carbon agglomerate.

2. The method of producing a carbon agglomerate according to claim 1, wherein the gas includes one or both of CO gas and CH₄ gas.

3. The method of producing a carbon agglomerate according to claim 2, wherein the feed gas includes the CO gas and hydrogen gas.

4. The method of producing a carbon agglomerate according to claim 2, wherein the feed gas consists of the CH₄ gas.

5. The method of producing a carbon agglomerate according to any one of claims 1 to 4, wherein the solid contains one or more selected from the group consisting of sintered ore, iron ore, and reduced iron.

6. The method of producing a carbon agglomerate according to any one of claims 1 to 5, wherein the carbon precipitation process is carried out at an ambient temperature that is 300 °C or more and 1500 °C or less.

7. The method of producing a carbon agglomerate according to any one of claims 1 to 6, wherein the carbon-containing precipitate contains 1 mass% or more of T.Fe.

8. The method of producing a carbon agglomerate according to any one of claims 1 to 7, wherein the agglomeration process is a hot pressing process in which the carbon-containing precipitate is pressurized and heated simultaneously.

9. The method of producing a carbon agglomerate according to claim 8, wherein the maximum temperature of the carbon-containing precipitate in the hot pressing process is 750 °C or more.

10. The method of producing a carbon agglomerate according to any one of claims 1 to 9, wherein the agglomeration process is carried out without adding a binder to the carbon-containing precipitate.

11. The method of producing a carbon agglomerate according to any one of claims 1 to 10, wherein the indirect tensile strength of the carbon agglomerate is 5 MPa or more.
